# EUROPEAN PATENT APPLICATION

(11) **EP 4 474 824 A1**
(43) Date of publication of application: **11.12.2024**
(21) Application number: 22924200.3
(22) Date of filing: 23.12.2022
(51) Int. Cl.: G01N 35/00, G01N 35/02

(54) **AUTOMATED ANALYZING DEVICE**

(30) Priority: 31.01.2022 JP 2022013101
(71) Applicant: HITACHI HIGH-TECH CORPORATION, Tokyo 105-6409 (JP)
(72) Inventor: TSUNASHIMA Kenta, Tokyo 105-6409 (JP); KOURAI Yuusuke, Tokyo 100-8280 (JP); TANAKA Yuto, Tokyo 105-6409 (JP)
(74) Representative: Strehl Schübel-Hopf & Partner
(86) International application number: PCT/JP2022/047786
(87) International publication number: WO 2023/145353

(57) **Abstract**

The objective of the present invention is to provide a highly reliable automated analyzing device capable of determining an agitation state with a high degree of accuracy, regardless of differences in physical properties attributable to the materials or construction of an ultrasonic wave generating source. To this end, the automated analyzing device of the present invention comprises an agitating unit agitating a specimen and a reagent, an analyzing unit using a reaction solution of the specimen and the reagent to perform a component analysis of the specimen, and a control unit controlling the agitating unit and the analyzing unit, the agitating unit comprising an ultrasonic wave generating source for generating ultrasonic waves, a drive circuit for driving the ultrasonic wave generating source, and a waveform detecting unit detecting an electric waveform output from the ultrasonic wave generating source in conjunction with the driving thereof, wherein: the agitating unit additionally includes a harmonic component extracting unit extracting a harmonic component from the electric waveform detected by the waveform detecting unit; and the control unit determines the acceptability of an agitation state of the agitating unit on the basis of a signal strength of the harmonic component extracted by the harmonic component extracting unit.

## Description

### Technical Field

The present invention relates to an automatic analyzer.

### Background Art

An automatic analyzer performs qualitative and quantitative analysis by adding, stirring, and reacting a reagent that specifically reacts with a specific component contained in a biological sample such as blood or urine, and measuring absorbance or luminescence amount of a reaction solution. In a stirring unit of the automatic analyzer, stirring using an ultrasonic wave is proposed in order to prevent a phenomenon called carry-over that affects a next analysis result by continuous stirring.

Stirring using the ultrasonic wave has an advantage that the carry-over does not occur, but if irradiation conditions for a stirred liquid are not carefully adjusted, the stirring may not be sufficiently performed, and therefore, an automatic analyzer that determines whether a stirring state is good or poor and adjusts the irradiation conditions is known. For example, PTL 1 discloses an automatic analyzer that detects a waveform of a voltage generated by an ultrasonic wave generation source, normalizes an amplitude from a maximum value and a minimum value of the detected waveform, and determines whether a stirring state by the ultrasonic wave generation source is good or poor by comparison with a normal state.

### Citation List

### Patent Literature

PTL 1: JP2003-254979A

### Summary of Invention

### Technical Problem

However, it is found that, depending on a material and a structure of the ultrasonic wave generation source, even when an intensity of the detected waveform is high, a stirring flow may not be obtained.

The invention has been made to solve such a problem, and an object of the invention is to provide a highly reliable automatic analyzer capable of determining a stirring state with high accuracy regardless of a difference in a physical property due to a material or a structure of an ultrasonic wave generation source.

### Solution to Problem

In order to solve the above-described problems, the invention provides an automatic analyzer including: a stirring unit configured to stir a sample and a reagent; an analysis unit configured to perform component analysis of the sample using a reaction solution of the sample and the reagent; and a control unit configured to control the stirring unit and the analysis unit. The stirring unit includes an ultrasonic wave generation source that generates an ultrasonic wave, a drive circuit that drives the ultrasonic wave generation source, and a waveform detection unit that detects an electric waveform output from the ultrasonic wave generation source in accordance with driving, the stirring unit further includes a harmonic component extraction unit that extracts a harmonic component from the electric waveform detected by the waveform detection unit, and the control unit determines whether a stirring state of the stirring unit is good or poor based on a signal intensity of the harmonic component extracted by the harmonic component extraction unit.

### Advantageous Effects of Invention

According to the invention, it is possible to provide a highly reliable automatic analyzer capable of determining a stirring state with high accuracy regardless of a difference in a physical property due to a material or a structure of an ultrasonic wave generation source.

### Brief Description of Drawings

[FIG. 1] FIG. 1 is an overall schematic configuration diagram of an automatic analyzer according to the embodiment.
[FIG. 2] FIG. 2 is a configuration diagram showing details of a portion related to a stirring unit.
[FIG. 3A] FIG. 3A is a conceptual diagram showing a stirring state in a case in which a piezoelectric element performs an expansion and contraction movement only by a fundamental wave.
[FIG. 3B] FIG. 3B is a conceptual diagram showing a stirring state in a case in which the piezoelectric element performs the expansion and contraction movement by including harmonics.
[FIG. 4A] FIG. 4A shows graphs showing a time change A of an amount of polarization and a frequency distribution A' of the amount of polarization when a sinusoidal voltage a is applied to the piezoelectric element.
[FIG. 4B] FIG. 4B shows graphs showing a time change B of an amount of polarization and a frequency distribution B' of the amount of polarization when a sinusoidal voltage b is applied to the piezoelectric element.
[FIG. 5A] FIG. 5A shows graphs showing a voltage waveform 501 detected by a waveform detection unit and a frequency component decomposed by a harmonic component extraction unit when a stirring flow is weak.
[FIG. 5B] FIG. 5B shows graphs showing a voltage waveform 504 detected by the waveform detection unit and the frequency component decomposed by the harmonic component extraction unit when the stirring flow is sufficient.
[FIG. 6] FIG. 6 is an example of a screen displayed on an output unit showing a good-or-poor determination result of the stirring state.
FIG. 7 is a flowchart showing an operation when a mode of good-or-poor determination of the stirring state and an automatic adjustment is executed.

### Description of Embodiments

An embodiment of the invention will be described in detail with reference to the drawings. In the following embodiment, it is needless to mention that components (also including element steps and the like) thereof are not necessarily essential unless otherwise specified or unless clearly considered to be essential in principle.

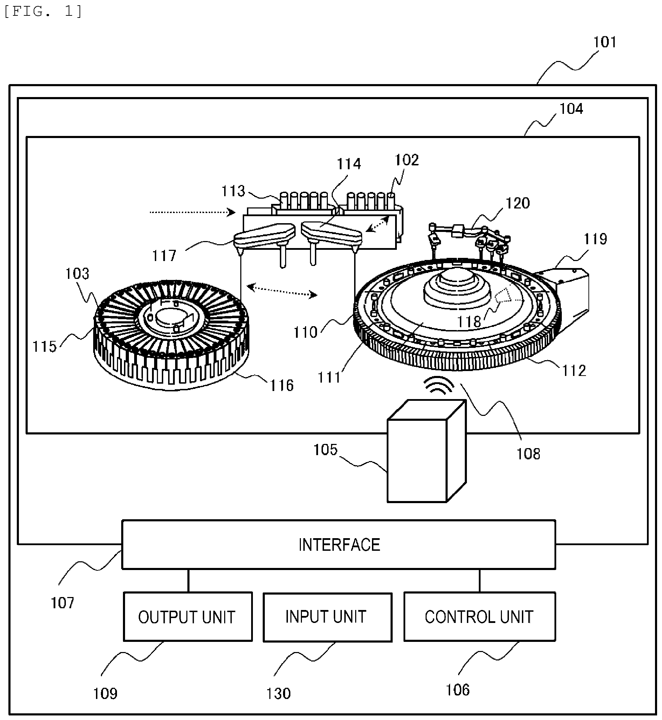

FIG. 1 is an overall schematic configuration diagram of an automatic analyzer 101 according to the embodiment. As shown in FIG. 1, the automatic analyzer 101 analyzes a specific component in a sample by reacting a sample 102 with a reagent 103, and includes an analysis unit 104, a stirring unit 105, a control unit 106, an output unit 109, an input unit 130, and an interface 107.

The analysis unit 104 includes a sample aliquoting mechanism 114 that dispenses the sample 102 in a sample container 113 into a reaction vessel 110, a reagent disk 116 that stores a reagent container 115 containing the reagent 103, a reagent aliquoting mechanism 117 that dispenses the reagent 103 into the reaction vessel 110, a light source 118 for irradiating a reaction solution obtained by reacting the sample 102 with the reagent 103 in the reaction vessel 110 with light, a spectrophotometer 119 that measures absorbance of the reaction solution, and a cleaning mechanism 120 that cleans the reaction vessel 110 after completion of the measurement.

The stirring unit 105 stirs the sample 102 and the reagent 103 dispensed into the reaction vessel 110 by an ultrasonic wave 108. In addition to controlling an operation of each unit, the control unit 106 performs good-or-poor determination for a stirring state of the stirring unit 105 and performs an automatic adjustment as described later. The output unit 109 displays a result of the good-or-poor determination or the automatic adjustment, an alarm of an automatic adjustment error, and the like, and is, for example, a display. The input unit 130 is used when a user inputs operation information and the like, and is, for example, a keyboard. The interface 107 connects each mechanism of the analysis unit 104 to the control unit 106, the output unit 109, and the input unit 130, and exchanges signals.

In the embodiment, a biochemical automatic analyzer that obtains a concentration of a predetermined component using the spectrophotometer 119 that measures absorbance will be described as an example, whereas the technique disclosed in the embodiment to be described later may be used for an immune automatic analyzer or a coagulation automatic analyzer that measures a sample using another spectrophotometer.

Component analysis of the sample 102 in the automatic analyzer 101 is mainly performed in the following procedure.

To start the analysis, the user inputs, using the input unit 130, information such as analysis items and amounts of the sample 102 and the reagent 103. Then, the control unit 106 automatically creates an analysis program and controls each unit as follows based on the program.

First, a belt or a motor carries the sample container 113 containing the sample 102 to a sample aliquoting position. Next, the sample aliquoting mechanism 114 aspirates the sample 102 from the sample container 113 and dispenses the sample 102 into the reaction vessel 110 placed on a reaction disk 111. Further, when the reaction disk 111 rotates, the reaction vessel 110 into which the sample 102 is dispensed moves to a reagent aliquoting position. Thereafter, the reagent aliquoting mechanism 117 aspirates the reagent 103 from the reagent container 115 and dispenses the reagent 103 into the reaction vessel 110 into which the sample 102 is dispensed. The reaction vessel 110 into which the sample 102 and the reagent 103 are dispensed moves to a stirring position by the rotation of the reaction disk 111.

Thereafter, the stirring unit 105 stirs the sample 102 and the reagent 103 in the reaction vessel 110 by the stirring unit 105. When the stirring is completed, the reaction disk 111 further rotates, and the reaction vessel 110 moves to an absorbance measurement position. Next, the spectrophotometer 119 measures the absorbance during or after the reaction between the sample 102 and the reagent 103. When the measurement of the absorbance is completed, the reaction disk 111 further rotates, and the reaction vessel 110 moves to a cleaning position. Further, the cleaning mechanism 120 aspirates a reaction solution in the reaction vessel 110 to clean the reaction vessel 110.

Although the component analysis of one sample is executed by a series of operations as described above, the same component analysis is executed in parallel as batch processing for a plurality of other samples.

Next, a structure of the stirring unit 105 according to the embodiment will be described.

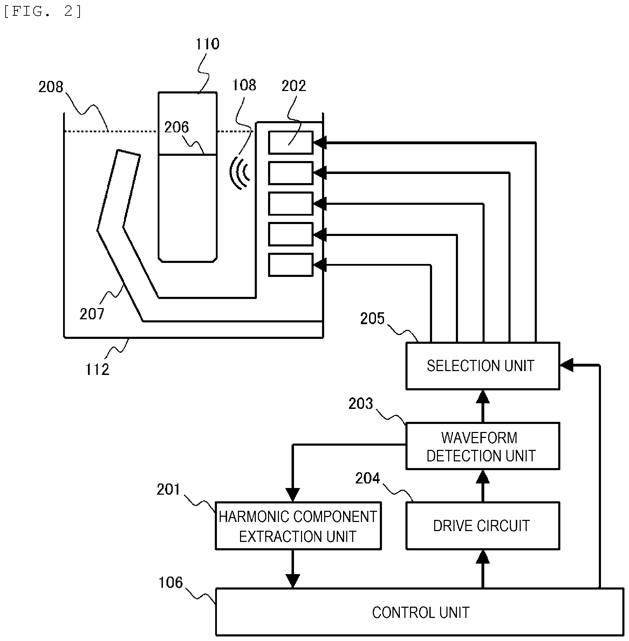

FIG. 2 is a configuration diagram showing details of a portion related to the stirring unit 105. The stirring unit 105 includes, in addition to ultrasonic wave generation sources 202, a reflection plate 207, a selection unit 205, a drive circuit 204, a waveform detection unit 203, and a harmonic component extraction unit 201.

The ultrasonic wave generation sources 202 are installed in a reaction tank 112 filled with a heat insulating medium 208 and generates the ultrasonic wave 108. The ultrasonic wave 108 propagates through the heat insulating medium 208, enters the reaction vessel 110 from a side surface of the reaction vessel 110 disposed to be immersed in the heat insulating medium 208, and reaches a liquid containing a sample and a reagent (hereinafter, referred to as a "stirred liquid 206"), thereby stirring the stirred liquid 206.

As a material of the ultrasonic wave generation source 202, a piezoelectric element which is an element utilizing a piezoelectric effect is used. Among the piezoelectric elements, a piezoelectric ceramic element mainly made of lead zirconate titanate (PZT) is preferable because it has a simple configuration and high sensitivity and can improve various characteristics by adding additives. Here, the piezoelectric effect refers to a phenomenon in which when a voltage is applied to a piezoelectric element, polarization in which surface charge is biased occurs due to a change in an internal crystal structure, and the piezoelectric element mechanically expands or contracts depending on a state of the polarization. Since the polarization and mechanical expansion and contraction of the piezoelectric element follow the applied voltage, the ultrasonic wave propagates through a medium in contact with the piezoelectric element by setting a frequency of the applied voltage to about 20 kHz or more.

As a material of the ultrasonic wave generation source 202, in addition to the piezoelectric element that utilizes the piezoelectric effect described above, a material that utilizes a magnetostrictive effect may be used. The magnetostrictive effect is a phenomenon in which a magnetic body expands and contracts due to a magnetic field generated by passing a current through coils wound around the magnetic body. As compared with the method using the piezoelectric effect, a method using the magnetostrictive effect has an advantage that a high voltage is not required due to current driving, but has a disadvantage that a large space is required due to presence of the magnetic body or the coils.

Further, a plurality of the ultrasonic wave generation sources 202 according to the embodiment are disposed in an array in a height direction, and each of the ultrasonic wave generation sources 202 is provided with an electrode. In consideration of risk of electric leakage to the heat insulating medium 208, a surface of each electrode on a side in contact with the heat insulating medium 208 is grounded as a GND electrode, or an insulating layer is provided.

The reflection plate 207 is provided to extend to an opposite side from the ultrasonic wave generation source 202 with respect to the reaction vessel 110, and reflects the ultrasonic wave 108 transmitted through the reaction vessel 110 and the like to irradiate the reaction vessel 110 again. The ultrasonic wave 108 reflected by the reflection plate 207 enters the reaction vessel 110 from the side surface of the reaction vessel 110 and reaches the stirred liquid 206, thereby stirring the stirred liquid 206.

Here, the reflection plate 207 has an upper inclination and a lower inclination so as to be refracted. The upper inclination serves to reflect the transmitted ultrasonic wave 108 downward and emit the ultrasonic wave 108 toward the reaction vessel 110 again. Meanwhile, the lower inclination serves to release air bubbles unintentionally generated by stirring of the stirred liquid 206 toward a liquid surface of the stirred liquid 206. When air bubbles are eliminated from an absorbance measurement region, reliability of analysis is improved.

The selection unit 205 switches the electrode to be driven among the electrodes provided in the plurality of ultrasonic wave generation sources 202 as described above. Therefore, even if a liquid amount of the stirred liquid 206 is different for each analysis item, the selection unit 205 selects and drives one or a plurality of electrodes corresponding to the liquid amount, and thus it is possible to irradiate an appropriate height region with the ultrasonic wave 108. For example, a relay or a multiplexer is used as the selection unit 205.

The drive circuit 204 is controlled under a driving condition set by the control unit 106, and applies a voltage to the electrode selected by the selection unit 205 to drive the corresponding ultrasonic wave generation source 202.

The waveform detection unit 203 detects an electric waveform output from the electrode of the ultrasonic wave generation source 202 in accordance with driving. The electric waveform detected by the waveform detection unit 203 may be any of a current waveform, an output waveform, and an instantaneous power waveform. For example, the current waveform is detected as a current flowing in accordance with a magnetic field generated in an electric circuit using coils or a Hall element. When the waveform detection unit 203 detects the current waveform, there is an advantage that it can be electrically insulated from the drive circuit 204, but there is a disadvantage that accuracy deteriorates, as compared with the case of detecting the voltage waveform. The instantaneous power waveform can be detected by providing a circuit having a function of a digital multiplier or an analog multiplier in addition to the detection of the current waveform and the voltage waveform. When the waveform detection unit 203 detects the instantaneous power waveform, there is an advantage that the power in consideration of both the voltage and the current can be detected, but there is a disadvantage that it takes a time longer than the detection of only the voltage or the current. The output waveform in accordance with the driving of the ultrasonic wave generation source 202 may be detected using a sound pressure detection sensor or an acceleration sensor.

The harmonic component extraction unit 201 decomposes the electric waveform detected by the waveform detection unit 203 for each frequency component, and extracts a harmonic component. Here, the harmonic means a wave having a frequency component that is an integral multiple of a frequency of a fundamental wave with respect to a fundamental wave of an electric waveform. In addition, as units for implementing the function of decomposing the electric waveform for each frequency component, for example, there is a fast Fourier transform (FFT) analyzer and a lockin amplifier using phase-sensitive detection. Information on a signal intensity of the harmonic component extracted by the harmonic component extraction unit 201 is fed back to the control unit 106, and the control unit 106 determines whether the stirring state of the stirring unit 105 is good or poor based on the information.

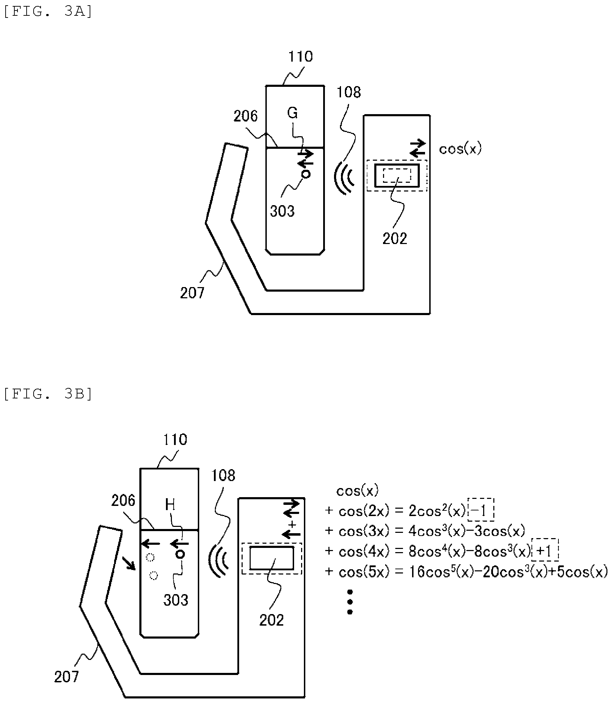

Next, a relationship between the ultrasonic wave 108 output from the ultrasonic wave generation source 202 and good-or-poor of the stirring state will be described with reference to FIGS. 3A and 3B. In the following description, it is assumed that the ultrasonic wave generation source 202 is a piezoelectric element. FIG. 3A is a conceptual diagram showing the stirring state when the piezoelectric element performs an expansion and contraction movement only by a fundamental wave, and FIG. 3B is a conceptual diagram showing the stirring state when the piezoelectric element performs the expansion and contraction movement by including harmonics.

First, as shown in FIG. 3A, when the piezoelectric element performs a periodic expansion and contraction movement only by a fundamental wave cos(x), the ultrasonic wave 108 is also a wave of only the fundamental wave. Displacement information of the ultrasonic wave 108 at this time propagates through the stirred liquid 206 as a medium, and a water molecule 303 in the reaction vessel 110 performs only a small reciprocating movement as indicated by an arrow G of a wavelength of a vertical wave. That is, when the expansion and contraction movement of the piezoelectric element includes only the fundamental wave, a sufficient stirring flow is not generated in the reaction vessel 110.

On the other hand, as shown in FIG. 3B, when the piezoelectric element performs the expansion and contraction movement by including the harmonics, the ultrasonic wave 108 also becomes a wave including the harmonics. Focusing on each frequency component of the harmonics, odd-order harmonics are represented by a sum of periodic functions, whereas even-order harmonics include a DC component. Therefore, when the displacement information of the ultrasonic wave 108 propagates, the water molecule 303 in the reaction vessel 110 moves in a certain direction as indicated by an arrow H. That is, the harmonic component included in the expansion and contraction movement of the piezoelectric element contributes to generation of the stirring flow in the reaction vessel 110. The stirring unit 105 can stir the stirred liquid 206 in a non-contact manner by intermittently burst-emitting the ultrasonic wave 108 having the DC component. Here, a duty ratio and an irradiation frequency of ultrasonic wave irradiation are preferably set based on dimensions of the reaction vessel 110.

Next, a relationship between the voltage applied to the piezoelectric element and an amount of expansion and contraction (amount of polarization) of the piezoelectric element will be described. First, a relationship between an amount of polarization P and an applied voltage Vᵢ has a predetermined polarization characteristic 405 for each physical property of the piezoelectric element. Since the polarization characteristic 405 of a general piezoelectric element has hysteresis, a hysteresis characteristic will be specifically described.

When no voltage is applied to the piezoelectric element, the polarization is oriented in various directions in order to stabilize a state within a crystal. On the other hand, when a voltage is applied to the piezoelectric element, the polarization is biased, and when the voltage is further applied, saturation of the amount of polarization occurs when the polarization is aligned beyond an energy barrier and can no longer be aligned. Thereafter, when the applied voltage decreases, the polarization that is aligned beyond the energy barrier is energetically more stable by maintaining the state as it is as compared with the polarization that is aligned beyond the energy barrier again, and thus the polarization bias is less likely to be eliminated than when the applied voltage increases. That is, the polarization characteristic of the piezoelectric element has hysteresis, with the amount of polarization being different when the applied voltage increases and when the applied voltage decreases.

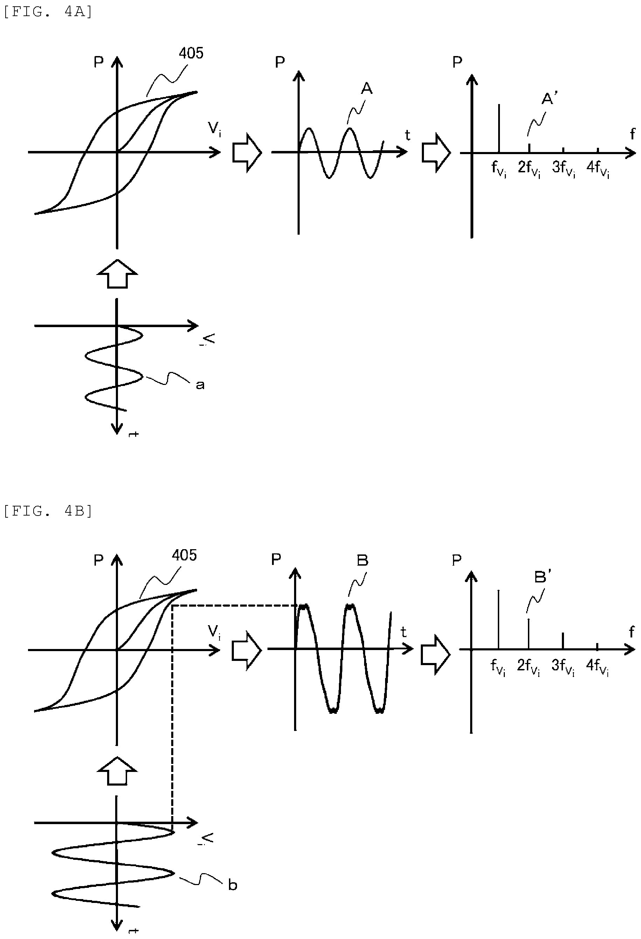

FIG. 4A shows graphs showing the time change A of the amount of polarization P and the frequency distribution A' of the amount of polarization P when the sinusoidal voltage a is applied as the applied voltage Vᵢ to the piezoelectric element having the polarization characteristic 405. As shown in FIG. 4A, when the sinusoidal voltage a is applied to the piezoelectric element, the time change A of the amount of polarization P is close to a sinusoidal wave, and when the waveform is decomposed into the frequency component, it can be seen that the signal intensity of the harmonic component is weak, as shown in the frequency distribution A' .

Here, the larger the amount of polarization P, the larger the amount of expansion and contraction of the piezoelectric element. When the piezoelectric element contracts in response to a positive increase in the amount of polarization P, the piezoelectric element expands in response to a negative increase in the amount of polarization P. A relationship between the positive increase and the negative increase in the amount of polarization P and the expansion and contraction of the piezoelectric element depends on a direction of the applied voltage Vᵢ and a state of polarization in the crystal.

Therefore, as shown in FIG. 4A, when the applied voltage Vᵢ to the piezoelectric element is the sinusoidal voltage a, the harmonic component included in the amount of polarization P is small, and the harmonic component included in the expansion and contraction movement of the piezoelectric element is also small, and thus a sufficient stirring flow is not generated.

FIG. 4B shows graphs showing the time change B of the amount of polarization P and the frequency distribution B' of the amount of polarization P when the sinusoidal voltage b is applied as the applied voltage Vᵢ to the piezoelectric element having the polarization characteristic 405. As shown in FIG. 4B, when the sinusoidal voltage b is applied to the piezoelectric element, the time change B of the amount of polarization P includes distortion, and when the waveform is decomposed into the frequency component, it can be seen that the signal intensity of the harmonic component is strong, as shown in the frequency distribution B'. Therefore, as shown in FIG. 4B, when the applied voltage Vᵢ to the piezoelectric element is the sinusoidal voltage b, the harmonic component included in the amount of polarization P is large, and the harmonic component included in the expansion and contraction movement of the piezoelectric element is also large, and thus a sufficient stirring flow is generated.

As described above, even in the piezoelectric element having the same polarization characteristic 405, when the applied voltage Vᵢ differs, the amount of polarization P or the expansion and contraction movement may or may not include the harmonic component. This is considered to be determined by a combination of the polarization characteristic 405 indicating ease of polarization of the piezoelectric element and an amplitude or a frequency of the applied voltage Vᵢ. That is, this means that, even when the voltage (amplitude) applied to the piezoelectric element is increased, depending on the polarization characteristic 405 of the piezoelectric element, the expansion and contraction movement of the piezoelectric element does not include the harmonics, and there is a chance of emitting the ultrasonic wave that does not generate a stirring flow.

Next, the good-or-poor determination of the stirring state of the stirring unit 105 in the automatic analyzer 101 will be described. As described above, a voltage is applied to the piezoelectric element which is the ultrasonic wave generation source 202, and the piezoelectric element is polarized (expanded and contracted) to generate an ultrasonic wave. The waveform detection unit 203 according to the embodiment detects an electric waveform such as a voltage or a current generated in the piezoelectric element due to the polarization (expansion and contraction) via the electrode.

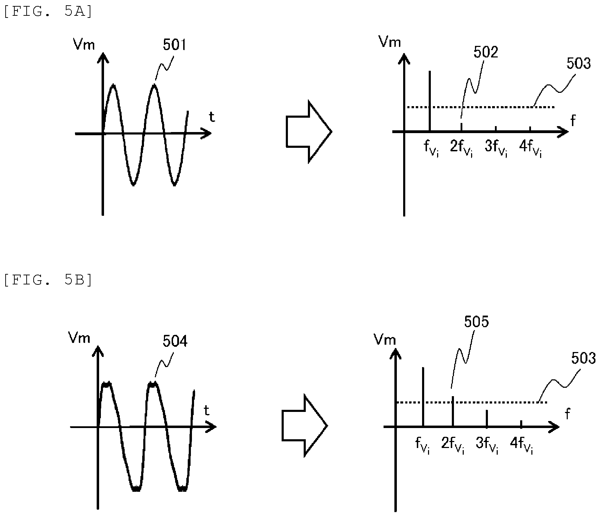

FIG. 5A shows graphs showing the voltage waveform 501 (time change of a voltage Vₘ) detected by the waveform detection unit 203 and a frequency component (frequency distribution of the voltage Vₘ) decomposed by the harmonic component extraction unit 201 when the stirring flow is weak. As shown in FIG. 5A, in the voltage waveform 501 detected when the stirring flow is weak, the signal intensity of the harmonics other than a fundamental wave (f_{Vi}) is weak and a signal intensity 502 of a secondary harmonic (2f_{Vi}) component is less than a threshold value 503 when the voltage waveform 501 is decomposed into the order of the integral multiple of the fundamental wave. From this, it can be confirmed that the ultrasonic wave generating the stirring flow cannot be output. The threshold value 503 corresponds to the signal intensity of the secondary harmonic component, which is required as a minimum condition when a good stirring state is regarded.

On the other hand, FIG. 5B shows graphs showing the voltage waveform 504 (time change of the voltage Vₘ) detected by the waveform detection unit 203 and the frequency component (frequency distribution of the voltage Vₘ) decomposed by the harmonic component extraction unit 201 when the stirring flow is sufficient. As shown in FIG. 5B, in the voltage waveform 504 detected when the stirring flow is sufficient, a signal intensity 505 of the secondary harmonic (2f_{Vi}) component is equal to or greater than the threshold value 503 when the voltage waveform 504 is decomposed into the order of the integral multiple of the fundamental wave. From this, it can be confirmed that the ultrasonic wave generating the stirring flow can be output.

Here, it is considered that the reason why the electric waveform output from the piezoelectric element contains a large amount of radio-frequency components is that the piezoelectric element performs the expansion and contraction movement including the distortion as described above. Further, whether the piezoelectric element performs the expansion and contraction movement including the distortion is determined by a combination of a material or a structure of the piezoelectric element and a driving condition (a set value of a voltage or a frequency of the drive circuit 204). That is, when the piezoelectric element is regarded as a load, even if the harmonic is not included in the voltage intended to be applied to the piezoelectric element by the drive circuit 204, the entire system including the piezoelectric element operates to include the harmonic component depending on the physical property of the piezoelectric element and the setting of the drive circuit 204.

Therefore, according to the embodiment, the electric waveform output from the piezoelectric element is decomposed for each frequency component, and the signal intensity of the harmonic component is compared with a threshold value to determine whether the stirring state is good or poor. In the determination, since only the secondary harmonic is compared with the threshold value, it is possible to perform the determination with high accuracy with a small calculation load. However, a determination method is not limited to a method for comparing an absolute value of the signal intensity of the harmonic component. For example, when a ratio of the signal intensity of the secondary harmonic component to the signal intensity of the fundamental wave is equal to or greater than a reference value, it may be determined that the stirring state is good.

In this way, by normalizing a magnitude of the electric waveform output from the piezoelectric element and comparing a normalized value with the reference value, it is possible to perform the good-or-poor determination appropriately according to the driving condition. Further, the harmonic used for the good-or-poor determination may further improve determination accuracy by including not only the second order but also other even orders.

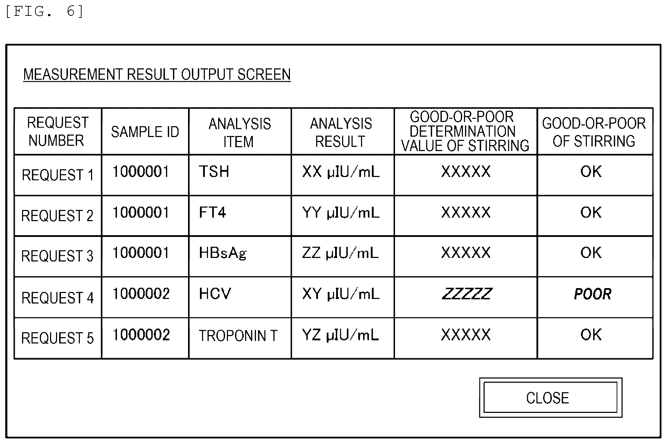

FIG. 6 is an example of a screen displayed on the output unit 109 showing a good-or-poor determination result of the stirring state. When the good-or-poor determination of the stirring state is performed during stirring of each sample and the reagent in an analysis sequence, if an analysis result of the sample and the stirring state during the analysis are output side by side to the output unit 109 as shown in FIG. 6, reliability of the analysis result is enhanced. In addition, even when it is temporarily determined that the stirring state is not good for a part of the analysis, if it is determined that the stirring state for another analysis is good, the user can determine that another analysis result is valid.

In the above description, a point of determining whether the stirring state is good or poor is described. Next, a point that the control unit 106 automatically changes (automatically adjusts) a setting of the drive circuit 204 when it is determined that the stirring state is not good will be described.

First, the driving conditions of the drive circuit 204 that can be changed by the control unit 106 include a frequency of a waveform applied to the piezoelectric element and a magnitude of an electric signal applied to the piezoelectric element (amplitude of the waveform). For example, as described above, depending on the structure (a shape, a dimension, and the like) and the material (an elastic modulus, a density, and the like) of the piezoelectric element, the frequency at which the polarization (expansion and contraction) is easy differs. Therefore, when a good stirring state is not obtained, by changing the frequency of the voltage waveform to be applied, polarization response with respect to the applied waveform is changed, and it is also possible to add the harmonic component to the expansion and contraction movement of the piezoelectric element. Similarly, even when the magnitude of the electric signal to be applied is changed, the polarization response is changed, and the expansion and contraction movement of the piezoelectric element may include the harmonic component. However, if the harmonic component is included in the expansion and contraction movement of the piezoelectric element, change items of the driving condition are not limited to only the frequency and the amplitude, and for example, a method for applying an offset to the applied waveform, or a method for intentionally distorting the applied waveform may be used.

Here, it is considered that the piezoelectric element mainly made of PZT, which is generally used as the ultrasonic wave generation source 202, has a wide frequency range in which the intensity of the harmonic component is generated to be large, and has a physical property in which the distortion is easily generated with respect to a time change in expansion and contraction. Therefore, in the automatic analyzer 101 using such an ultrasonic wave generation source 202, the good-or-poor determination of the stirring state can be performed by monitoring the intensity such as an amplitude of the waveform output from the ultrasonic wave generation source 202 or monitoring a resonance frequency by impedance measurement. However, when the ultrasonic wave generation source 202 is formed of a material other than PZT, even when the intensity of the output waveform from the ultrasonic wave generation source 202 is high, there is a chance that the stirring flow is not generated or a clear frequency resonance point cannot be detected by the impedance measurement of the ultrasonic wave generation source 202.

Therefore, in the automatic analyzer 101 according to the embodiment, since the harmonic component contributing to the generation of the stirring flow is monitored, whether the stirring state is good or poor can be determined with high accuracy regardless of the material or the structure of the ultrasonic wave generation source 202, and the reliability of the automatic analyzer is improved. As a result, it is also possible to use a material having a physical property that hardly generates the distortion as the ultrasonic wave generation source 202, and it is possible to provide a highly reliable automatic analyzer even when the ultrasonic wave generation source 202 is replaced, for example, from a lead-containing material to a lead-free material. It is also possible to determine the stirring state with higher accuracy by monitoring not only the harmonic component output from the ultrasonic wave generation source 202 but also active power consumed by the ultrasonic wave generation source 202.

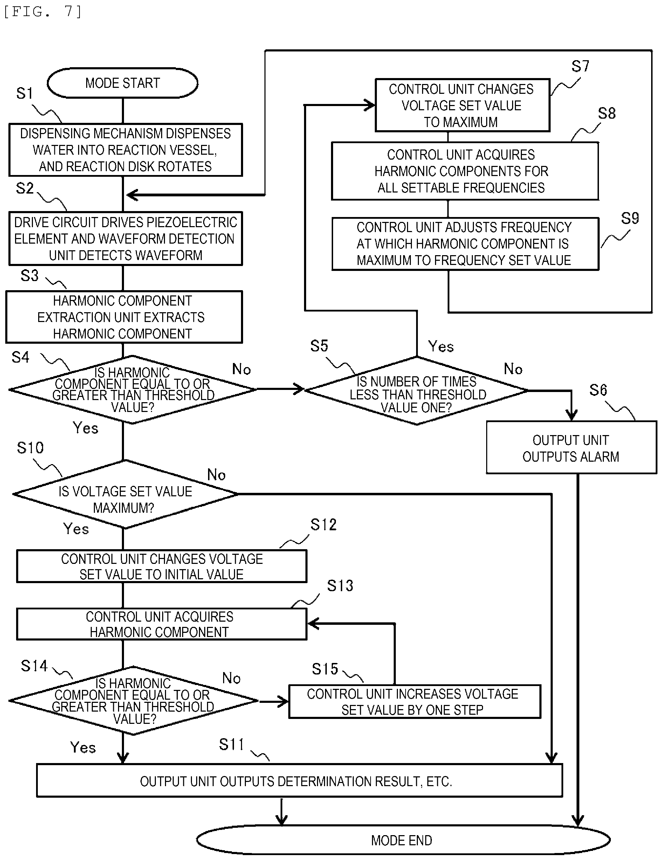

Next, an overall operation from the good-or-poor determination of the stirring state to an adjustment of the driving condition will be described. FIG. 7 is a flowchart showing an operation when a mode of the good-or-poor determination of the stirring state and an automatic adjustment is executed. In the embodiment, parameters that can be changed by the control unit 106 are a magnitude of the voltage (voltage set value) applied to the piezoelectric element by the drive circuit 204 and a frequency (frequency set value). The voltage set value and the frequency set value are selected from a plurality of discrete values including initial values. The initial values of the voltage set value and the frequency set value are stored in the control unit 106 in advance based on a driving condition under which the generation of the stirring flow is confirmed during a development stage of the automatic analyzer 101.

As shown in FIG. 7, when the mode of the good-or-poor determination of the stirring state is started, the sample aliquoting mechanism 114 dispenses water into the reaction vessel 110, and the reaction vessel 110 moves to a stirring position by the rotation of the reaction disk 111 (step S1). A liquid other than water may be used as long as the liquid necessary for determining the stirring state is dispensed into the reaction vessel 110.

Thereafter, the control unit 106 causes the drive circuit 204 to apply a voltage to the piezoelectric element, and causes the waveform detection unit 203 to detect an electric waveform output from the piezoelectric element in accordance with the voltage application (step S2). Next, the harmonic component extraction unit 201 decomposes the electric waveform detected by the waveform detection unit 203 for each frequency component to extract a secondary harmonic component (step S3). Then, the control unit 106 determines whether a signal intensity of the secondary harmonic component extracted by the harmonic component extraction unit 201 is equal to or greater than a threshold value (step S4).

When it is determined in step S4 that the signal intensity is less than the threshold value, the control unit 106 further determines whether the number of times that the value is determined to be less than the threshold value is one (step S5). When the number of times is two or more, since the automatic adjustment is not possible, the control unit 106 outputs an alarm to the output unit 109, and the mode of the good-or-poor determination ends (step S6).

On the other hand, when it is determined in step S5 that the number of times is one, the control unit 106 changes the voltage set value of the drive circuit 204 to a maximum value (step S7). Further, the control unit 106 executes step S2 and step S3 for all settable frequencies, and acquires the harmonic component extracted at each frequency (step S8). Further, the control unit 106 sets the frequency at which the signal intensity of the harmonic component is maximum as a new set frequency after adjustment (step S9), and the processing returns to step S2.

Next, when it is determined in step S4 that the signal intensity is equal to or greater than the threshold value, the control unit 106 further determines whether the voltage set value is the maximum value (step S10). When the voltage set value is not the maximum value, since the voltage set value remains at an initial value or a current value and the automatic adjustment is not necessary, the control unit 106 outputs, to the output unit 109, a determination result of the stirring state and completion (unnecessity) of the automatic adjustment (step S11).

On the other hand, when it is determined in step S10 that the voltage set value is the maximum value, the control unit 106 changes the voltage set value of the drive circuit 204 from the maximum value to the initial value (step S12). Further, the control unit 106 executes step S2 and step S3 again using the value changed in step S9 as the frequency set value, and acquires a secondary radio-frequency component extracted at that time (step S13). Further, the control unit 106 determines whether the secondary radio-frequency component acquired in step S13 is equal to or greater than a threshold value (step S14).

When it is determined in step S14 that the harmonic component is less than the threshold value, the control unit 106 increases the voltage set value of the drive circuit 204 from the initial value by one step (step S15), executes step S13 again, and repeats the same operation until it is determined in step S14 that the harmonic component is equal to or greater than the threshold value.

When it is determined in step S14 that the harmonic component is equal to or greater than the threshold value, the control unit 106 sets the voltage set value at that time and the frequency set value changed in step S9 as new set values after the automatic adjustment. At this time, the control unit 106 outputs, to the output unit 109, the determination result of the stirring state and the completion of the automatic adjustment (step S11).

As described above, when it is determined that the stirring state is poor, that is, when the harmonic component does not satisfy a predetermined condition, the control unit 106 automatically changes the voltage set value and the frequency set value of the drive circuit 204 so that good stirring can be performed, and thus it is possible to save a labor of an adjustment work of the stirring unit 105 performed by a maintenance person. In addition, at the time of the automatic adjustment, since the voltage set value is changed to be as small as possible, it is also possible to prevent an increase in power consumption and reduce deterioration in the piezoelectric element. Further, when it is difficult to cope with the change of the set value of the drive circuit 204, that is, when the harmonic component does not satisfy the predetermined condition even when the voltage of the drive circuit 204 is set to the maximum and the frequency is also set to a frequency at which a high output can be obtained, since the control unit 106 outputs an alarm to the output unit 109, it is possible to prompt the maintenance person to take actions.

Here, as described above, the initial values of the voltage set value and the frequency set value are determined based on the driving conditions under which a good stirring flow is confirmed in the development stage of the automatic analyzer 101. That is, the automatic adjustment of the driving conditions described with reference to FIG. 7 is intended to reduce the influence on the stirring caused by an individual difference in a piezoelectric element or a temporal change. Therefore, it is desirable that the mode of the automatic adjustment is not performed every time the stirring is performed during the analysis sequence, but is performed when the automatic analyzer 101 is initialized or before the analysis sequence starts. This is because, if the automatic adjustment is performed every time the stirring is performed during the analysis, not only a throughput of the entire automatic analyzer 101 decreases, but also a program used in sequence processing needs to be reconstructed in order to interrupt the automatic adjustment when the stirring state is determined to be poor. However, reliability of the analysis result may be ensured by performing the mode of the good-or-poor determination of the stirring state every time the stirring is performed in the analysis sequence.

As described above, the selection unit 205 can select one or two or more piezoelectric elements to be driven among a plurality of piezoelectric elements constituting the ultrasonic wave generation source 202. Here, when there is a variation in the physical property of each piezoelectric element, the driving conditions of the drive circuit 204 for performing a distorted expansion and contraction operation also differs for each piezoelectric element. When the plurality of piezoelectric elements are simultaneously driven, the characteristics of the entire system also change. However, as in the embodiment, the stirring state is determined based on the signal intensity of the radio-frequency component extracted from the electric waveform actually output when the selected piezoelectric element is driven, and the driving condition is adjusted, and thus it is possible to reliably generate a stirring flow. As a result, the sample and the reagent can be reliably stirred by the ultrasonic wave, and reliability of the automatic analyzer 101 is improved.

### Reference Signs List

101: automatic analyzer
102: sample
103: reagent
104: analysis unit
105: stirring unit
106: control unit
107: interface
108: ultrasonic wave
109: output unit
110: reaction vessel
111: reaction disk
112: reaction tank
113: sample container
114: sample aliquoting mechanism
115: reagent container
116: reagent disk
117: reagent aliquoting mechanism
118: light source
119: spectrophotometer
120: cleaning mechanism
130: input unit
201: harmonic component extraction unit
202: ultrasonic wave generation source
203: waveform detection unit
204: drive circuit
205: selection unit
206: stirred liquid
207: reflection plate
208: heat insulating medium
303: water molecule
405: polarization characteristic
501, 504: voltage waveform
502, 505: signal intensity
503: threshold value

## Claims

1. An automatic analyzer comprising:
a stirring unit configured to stir a sample and a reagent;
an analysis unit configured to perform component analysis of the sample using a reaction solution of the sample and the reagent; and
a control unit configured to control the stirring unit and the analysis unit, wherein
the stirring unit includes an ultrasonic wave generation source that generates an ultrasonic wave, a drive circuit that drives the ultrasonic wave generation source, and a waveform detection unit that detects an electric waveform output from the ultrasonic wave generation source in accordance with driving,
the stirring unit further includes a harmonic component extraction unit that extracts a harmonic component from the electric waveform detected by the waveform detection unit, and
the control unit determines whether a stirring state of the stirring unit is good or poor based on a signal intensity of the harmonic component extracted by the harmonic component extraction unit.

2. The automatic analyzer according to claim 1, wherein
the control unit automatically changes a frequency set value of the drive circuit when the harmonic component extracted by the harmonic component extraction unit does not satisfy a predetermined condition.

3. The automatic analyzer according to claim 2, further comprising:
an output unit configured to output a good-or-poor determination result of the stirring state, wherein
the control unit outputs an alarm to the output unit when the harmonic component does not satisfy the predetermined condition even if a voltage set value of the drive circuit is changed to a maximum value.

4. The automatic analyzer according to claim 1, wherein
the harmonic component extraction unit decomposes the electric waveform detected by the waveform detection unit for each frequency component to extract a secondary harmonic component, and
the control unit determines whether the stirring state of the stirring unit is good or poor based on a signal intensity of the secondary harmonic component extracted by the harmonic component extraction unit.

5. The automatic analyzer according to claim 4, wherein
the control unit determines that the stirring state of the stirring unit is good when a ratio of a signal intensity of a secondary harmonic to a signal intensity of a fundamental wave of the electric waveform is equal to or greater than a reference value.

6. The automatic analyzer according to claim 1, wherein
the ultrasonic wave generation source is a piezoelectric element made of a material not containing lead.
